Europäisches Patentamt

European Patent Office

Office européen des brevets

(19)

(11) **EP 0 707 040 B1**

(12) **EUROPÄISCHE PATENTSCHRIFT**

(45) Veröffentlichungstag und Bekanntmachung des Hinweises auf die Patenterteilung:
**25.02.1998 Patentblatt 1998/09**

(51) Int Cl.6: **C08L 23/04**

(21) Anmeldenummer: **95114501.0**

(22) Anmeldetag: **15.09.1995**

(54) **Polyethylen-Formmasse**

Polyethylene moulding compositions

Composition polyéthylène à mouler

(84) Benannte Vertragsstaaten:
**AT BE CH DE ES FR LI LU NL**

(30) Priorität: **12.10.1994 DE 4436418**

(43) Veröffentlichungstag der Anmeldung:
**17.04.1996 Patentblatt 1996/16**

(73) Patentinhaber: **Buna Sow Leuna Olefinverbund GmbH
06258 Schkopau (DE)**

(72) Erfinder:
• **Schellenberg, Jürgen, Dr.
D-06132 Halle (DE)**
• **Schade, Erich
D-06217 Merseburg (DE)**
• **Kerrinnes, Heinz-Jürgen, Dr.
D-06128 Halle (DE)**
• **Fritzsche, Gerd
D-06217 Merseburg (DE)**

(56) Entgegenhaltungen:
**EP-A- 0 129 312       EP-A- 0 308 088
EP-A- 0 517 222       US-A- 4 230 831
US-A- 5 284 613**

**Beschreibung**

Die Erfindung betrifft eine Polyethylen-Formmasse auf der Grundlage hochmolekularer Ethylenpolymerisate hoher Dichte zur Herstellung von Formkörpern wie beispielsweise Platten, Rohren oder Folien.

Es ist bekannt, daß durch die Herstellung von Mischungen aus Ethylenpolymerisaten hoher Dichte und linearen Ethylenpolymerisaten niedriger Dichte Formmassen mit verbesserten anwendungstechnischen Eigenschaften erzielt werden können (z.B. EP 66973). Diese Mischungen führen jedoch zwangsläufig auch zu speziellen Eigenschaften der Formmassen, die für spezifische Verarbeitungsverfahren bzw. zur Herstellung ausgewählter Formkörper unerwünscht sind. Hierzu gehören beispielsweise ein durch die Verwendung von linearen Ethylenpolymerisaten niedriger Dichte bedingter sehr starker Anstieg des Schmelzindex und damit der Fließfähigkeit sowie ein stark ausgeprägter Abfall des E-Moduls und damit ein hoher Verlust an Steifigkeit der Formmasse.

Andererseits sind Ethylenpolymere mit ultrahochmolekularer Molmasse bekannt, die sich jedoch aufgrund ihrer Eigenschaften, wie beispielsweise kein üblicherweise meßbarer Schmelzindex, einer Verarbeitung durch die gebräuchlichen Verarbeitungsverfahren weitgehend entziehen. Sie müssen erst beispielsweise durch Zusatz größerer Mengen an häufig niedermolekularen Substanzen in einen ausreichend verarbeitbaren Zustand gebracht werden, was ebenfalls mit einem Verlust eines guten Eigenschaftsniveaus spezieller Kennwerte verbunden ist. Das hierfür eingesetzte Ethylenpolymere mit ultrahochmolekularer Molmasse weist üblicherweise eine monomodale Molmassenverteilung auf (z. B. DE-OS 3213948).

Der Erfindung liegt die Aufgabe zugrunde, eine Polyethylen-Formmasse auf der Grundlage hochmolekularer Ethylenpolymerisate hoher Dichte mit einem ausgewogenen Eigenschaftsbild insbesondere einer guten Steifigkeit, wesentlich erhöhten Zähigkeit und verbesserten Spannungsrißbeständigkeit ohne wesentliche Beeinflussung des ursprünglichen Fließverhaltens zu entwickeln.

Erfindungsgemäß enthält die Polyethylen-Formmasse auf der Grundlage hochmolekularer Ethylenpolymerisate hoher Dichte

A) 40 bis 90 Masseprozent eines Ethylenpolymerisates hoher Dichte
mit einer Dichte bei 23 °C von 0,940 bis 0,955 g/cm$^3$, einem Schmelzindex MFI bei 190 °C und 49 N von 0,4 bis 1,0 g/10 min und einem Schmelzindexverhältnis MFR als Quotient des MFI bei einer Belastung von 212 N und des MFI bei einer Belastung von 49 N von 10 bis 30,

B) 5 bis 45 Masseprozent eines Ethylenpolymerisates hoher Dichte mit einer Dichte bei 23 °C von 0,940 bis 0,960 g/cm$^3$, einer Viskositätszahl J von 500 bis 1000 ml/g und einer breiten, vorzugsweise bimodalen Molmassenverteilung mit einem Bimodalitätsparameter B von 1,02 bis 2,0 und einem Maximum der Verteilung bei Molmassen größer als 800 000,

C) 2 bis 40 Masseprozent eines linearen Ethylenpolymerisates niedriger Dichte mit einer Dichte bei 23 °C von 0,910 bis 0,930 g/cm$^3$ und einem Schmelzindex MFI bei 190 °C und 21,2 N von 0,5 bis 10 g/10 min sowie

D) 0 bis 5 Massenprozent üblicher Kunststoffadditive einschließlich Stabilisatoren und Farbstoffe.

Gemäß der Erfindung wird die Polyethylen-Formmasse auf der Grundlage hochmolekularer Ethylenpolymerisate hoher Dichte hergestellt durch Mischen der genannten Ausgangskomponenten und anschließendes Granulieren der Mischung.

Bevorzugt werden 55 bis 75 Masseprozent der Komponente A, 15 bis 25 Masseprozent der Komponente B, 4 bis 20 Masseprozent der Komponente C und 0,2 bis 1,0 Masseprozent der Komponente D eingesetzt.

Die entwickelte Polyethylen-Formmasse auf der Grundlage hochmolekularer Ethylenpolymerisate hoher Dichte zeichnet sich dadurch aus, daß sie insbesondere bei einem guten Fließverhalten eine wesentlich erhöhte Zähigkeit und eine verbesserte Spannungsrißbeständigkeit bei einer guten Steifigkeit aufweist.

Nachstehend wird die Erfindung an einigen ausgewählten Ausführungsbeispielen näher erläutert.

Beispiel 1 (Vergleichsbeispiel)

Als Komponente A wurde ein Ethylenpolymerisat hoher Dichte, das durch Polymerisation nach dem Gasphasenverfahren hergestellt worden war, als Pulver zusammen mit 0,3 Masseprozent einer Stabilisatormischung, bestehend aus 50 Masseprozent Pentaerythrityltetrakis-[3-(3,5-di-tert.butyl-4-hydroxyphenyl)propionat] und 50 Masseprozent Tris-(2,4-di-tert-butyl-phenyl)phosphit auf einem Taumelmischer gemischt und auf einem Zweischnecken-Extruder mit einem Schneckendurchmesser von 25 mm und einem Verhältnis von Schneckenlänge zu Schneckendurchmesser von 32 bei einer Schmelztemperatur von 232 °C homogenisiert und granuliert. Das Granulat wies die in Tabelle 2 angegebenen Kennwerte für die Dichte (DIN 53479), den Schmelzindex MFI bei einer Temperatur von 190 °C und einer Belastung von 49 N (DIN 53735) sowie das Schmelzindexverhältnis MFR als Quotient des MFI bei einer Belastung von 212 N und des MFI bei einer Belastung von 49 N auf.

Nach der Herstellung normgerechter Prüfkörper aus dem Granulat wurden die in der Tabelle 3 zusammengefaßten anwendungstechnischen Kennwerte bezüglich Kerbschlagzähigkeit nach Izod (DIN 53453), Zug-E-Modul (DIN 53457) und Streckdehnung (DIN 53455) ermittelt. Die Bestimmung der Spannungsrißbeständigkeit erfolgte nach einem modifizierten Zeitstandzugversuch analog DIN 53449, Teil 2, an aus Preßplatten der Abmessung 300 mm x 300 mm x 10 mm hergestellten Prüfkörpern der Größe 110 mm x 10 mm x 10 mm. Als Prüfmedium diente Ethylenglykol bei einer Prüftemperatur von 80 °C und einer Belastung von 5 Kp. Als Kenngröße in der Tabelle 3 angegeben ist der Quotient

$$Q = \frac{t_p}{t_s}$$

der beobachteten Standzeit der aktuellen Probe $t_p$ in Stunden und der beobachteten Standzeit des Standards $t_s$ in Stunden. Als Standard diente stets die Probe des Beispiels 1. Weiterhin in der Tabelle 3 aufgeführte Eigenschaften sind der über DSC-Messungen ermittelte Schmelzpunkt als Peakmaximum und der Kristallinitätsgrad der Proben.

Beispiel 2 (Vergleichsbeispiel)

In diesem Beispiel wurde eine Mischung aus einem Ethylenpolymerisat hoher Dichte (Komponente A) und einem anderen Ethylenpolymerisat hoher Dichte, dessen Eigenschaften den für die Komponente B gestellten Anforderungen entsprechen, hergestellt.

Als Komponente A diente das bereits in Beispiel 1 verwendete Polymerisat.

Als Komponente B wurde ein ebenfalls nach dem Gasphasenverfahren hergestelltes Polymerisat als Pulver eingesetzt. Die molekularen Parameter dieses Polymerisates mit bimodaler Molmassenverteilung sind in Tabelle 4 zusammengestellt.

Dabei erfolgte die Bestimmung der Viskositätszahl J nach DIN 53728 bei einer Temperatur von 135 °C im Lösungsmittel Dekalin (Konzentration der Meßlösung: 0,00022 g Polymerisat/cm$^3$ Dekalin, Lösetemperatur: 150 °C). Zur Ermittlung der Molmassenverteilung wurde die Hochtemperatur-Ausschlußchromatographie bei einer Temperatur von 135 °C in 1,2,4-Trichlorbenzen herangezogen. Die Charakterisierung des Ausmaßes der Bimodalität der Molmassenverteilung erfolgte über die Bestimmung des Bimodalitätsparameters B mit

$$B = \frac{h_1{}^{max} + h_2{}^{max}}{2\,h^{min}}$$

wobei

$h_1{}^{max}$ - Peakhöhe am ersten Maximum der Verteilung
$h_2{}^{max}$ - Peakhöhe am zweiten Maximum der Verteilung
$h^{min}$ - Peakhöhe am Minimum der Verteilung (J. Schellenberg, B. Hamann: Plaste und Kautschuk 40 (1993) 225).

Beide Komponenten wurden in dem in der Tabelle 1 angegebenen Mischungsverhältnis unter den im Beispiel 1 genannten Bedingungen bei einer Schmelztemperatur von 236 °C ebenfalls in Gegenwart von 0,3 Masseprozent der im Beispiel 1 genannten Stabilisatormischung homogenisiert und granuliert.

Die Ergebnisse der Prüfung der verschiedenen Eigenschaften sind in den Tabellen 2 und 3 enthalten.

Beispiel 3

Hier wurde erfindungsgemäß eine Polyethylen-Formmasse aus zwei verschiedenen Ethylenpolymerisaten hoher Dichte (Komponenten A und B) sowie einem linearen Ethylenpolymerisat niedriger Dichte (Komponente C) hergestellt. Als Komponenten A und B dienten die bereits in den Beispielen 1 und 2 verwendeten Ethylenpolymerisate hoher Dichte. Als Komponente C wurde ein lineares Ethylenpolymerisat niedriger Dichte mit den in der Tabelle 5 aufgeführten Eigenschaften eingesetzt.

Die Herstellung der Formmasse erfolgte unter den im Beispiel 1 genannten Bedingungen bei einer Schmelztemperatur von ca. 240 °C mit der in der Tabelle 1 angegebenen Mischungszusammensetzung. Zur Stabilisierung der Formmasse wurden ebenfalls 0,3 Masseprozent der im Beispiel 1 aufgeführten Stabilisatormischung hinzugefügt.

Die nach der Prüfung der verschiedenen Eigenschaften erhaltenen Ergebnisse sind in den Tabellen 2 und 3 dargestellt.

Die Ergebnisse belegen, daß sich die in diesem Beispiel hergestellte Formmasse gegenüber den Vergleichsbeispielen 1 und 2 bei gleicher Dichte und gutem Zug-E-Modul, der gegenüber Beispiel 1 sogar noch deutlich höher ist, sowie bei ähnlichem Schmelzindex (gegenüber Beispiel 2 noch verbessert) durch eine wesentlich erhöhte Kerbschlagzähigkeit, eine wesentlich verbesserte Spannungsrißbeständigkeit sowie eine höhere Streckdehnung auszeichnet.

Beispiele 4 und 5

In diesen Beispielen wurden weitere Formmassen auf der Grundlage der in den Beispielen 1, 2 und 3 genannten Polymerisate hergestellt. Die Zusammensetzung der hergestellten Mischungen ist aus der Tabelle 1 ersichtlich. Auch hier wurden 0,3 Masseprozent der im Beispiel 1 genannten Stabilisatormischung zugegeben. Die Herstellung der Granulate erfolgte nach den Angaben des Beispiels 1, wobei hier bei einer Schmelztemperatur von ca. 240 °C gearbeitet wurde. Nach den Angaben des gleichen Beispiels erfolgte die Prüfung der Eigenschaften, die in den Tabellen 2 und 3 zusammengefaßt sind.

Die erhaltenen Kennwerte zeigen, daß sich die in diesen Beispielen hergestellten Formmassen gegenüber den Vergleichsbeispielen 1 und 2 bei ähnlichem Schmelzindex (gegenüber dem des Beispiels 2 noch etwas erhöht) und guter Steifigkeit durch eine bedeutend erhöhte Kerbschlagzähigkeit und eine wesentlich verbesserte Spannungsrißbeständigkeit sowie eine höhere Streckdehnung auszeichnen. Diese Formmassen besitzen desweiteren einen verminderten Schmelzpunkt und einen geringeren Kristallinitätsgrad, was die Verarbeitung bei ähnlicher Steifigkeit der Formmasse erleichtert.

Beispiel 6 (Vergleichsbeispiel)

Zum Vergleich wurde in diesem Beispiel eine Formmasse bestehend aus einem Ethylenpolymerisat hoher Dichte (Komponente A aus Beispiel 1) und einem linearen Ethylenpolymerisat niedriger Dichte (Komponente C aus Beispiel 3) entsprechend den Angaben in Beispiel 1 bei einer Schmelztemperatur von ca. 230 °C hergestellt. Die Zusammensetzung der Polymerkomponenten geht aus der Tabelle 1 und die Eigenschaften der Formmasse aus den Tabellen 2 und 3 hervor.

Aus den Ergebnissen ist ersichtlich, daß die Fließfähigkeit der Formmasse gegenüber den Vergleichsbeispielen 1 und 2 in unerwünschter Weise stark ansteigt. Weiterhin geht daraus hervor, daß sich die spannungsrißbeständigkeit nicht in der erwünschten Weise erhöht, sondern relativ konstant bleibt. Hieraus ist ersichtlich, daß bei nicht erfindungsgemäßem Vorgehen die erwünschten Eigenschaftskombinationen nicht erzielt werden können.

## Tabelle 1: Zusammensetzungen der Mischungen

| Beispiel Nr. | Komponente A [Masseprozent] | Komponente B [Masseprozent] | Komponente C [Masseprozent] | Komponente D [Masseprozent] |
|---|---|---|---|---|
| 1 | 99,7 | - | - | 0,3 |
| 2 | 79,76 | 19,94 | - | 0,3 |
| 3 | 74,78 | 19,94 | 4,98 | 0,3 |
| 4 | 69,79 | 19,94 | 9,97 | 0,3 |
| 5 | 59,82 | 19,94 | 19,94 | 0,3 |
| 6 | 90 | - | 10 | - |

EP 0 707 040 B1

EP 0 707 040 B1

Tabelle 2: Dichten, Schmelzindices und Schmelzindexverhältnisse der Proben

| Beispiel Nr. | Dichte bei 23 °C [g/cm$^3$] | MFI (190 °C, 49 N) [g/10 min] | MFR der Proben |
|---|---|---|---|
| 1 | 0,949 | 0,73 | 21,8 |
| 2 | 0,951 | 0,14 | 42,9 |
| 3 | 0,949 | 0,25 | 33,2 |
| 4 | 0,946 | 0,21 | 31,0 |
| 5 | 0,943 | 0,25 | 28,0 |
| 6 | 0,944 | 1,30 | 24,5 |

EP 0 707 040 B1

Tabelle 3: Eigenschaften der Proben

| Beispiel Nr. | Kerbschlagzähigkeit bei 23 °C [kJ/m$^2$] | Zug-E-Modul [N/mm$^2$] | Streck-dehnung [%] | Spannungs-rißbestän-digkeit Q | Schmelz-punkt [K] | Kristallinitäts-grad [%] |
|---|---|---|---|---|---|---|
| 1 | 10,2 | 958 | 9,16 | 1 | 403,0 | 64,0 |
| 2 | 14,4 | 1017 | 9,33 | 0,94 | 403,9 | 64,9 |
| 3 | 16,8 | 999 | 9,71 | 1,87 | 403,9 | 62,0 |
| 4 | 18,1 | 908 | 9,83 | 1,33 | 403,4 | 60,7 |
| 5 | 21,7 | 819 | 10,43 | 1,60 | 402,6 | 57,9 |
| 6 | - | - | - | 1,04 | - | - |

Tabelle 4:

| Eigenschaften der Komponente B aus Beispiel 2 | |
| --- | --- |
| Eigenschaft | Kennwert |
| Dichte bei 23 °C | $0,950$ g/cm$^3$ |
| Viskositätszahl J | $730$ cm$^3$/g |
| Molmassenverteilung: | |
| zahlenmittlere Molmasse $M_n$ | 36 400 |
| massenmittlere Molmasse $M_w$ | 839 000 |
| Uneinheitlichkeit U | 22,1 |
| Bimodalitätsparameter B | 1,11 |
| erstes Maximum | $2,0 \cdot 10^5$ |
| zweites Maximum | $1,3 \cdot 10^6$ |

Tabelle 5:

| Eigenschaften des linearen Ethylenpolymerisates niedriger Dichte | |
| --- | --- |
| Eigenschaft | Kennwert |
| Dichte bei 23 °C | $0,916$ g/cm$^3$ |
| Schmelzindex bei einer Temperatur von 190 °C und Belastung von 21,2 N | 2,2 g/10 min |
| Verzweigungsgrad (gemessen mittels FT-IR) | 0,91 $CH_3$/100 $CH_2$ |

**Patentansprüche**

1. Polyethylen-Formmasse auf der Grundlage hochmolekularer Ethylenpolymerisate hoher Dichte, enthaltend

    A) 40 bis 90 Masseprozent eines Ethylenpolymerisates hoher Dichte
    mit einer Dichte bei 23 °C von 0,940 bis 0,955 g/cm$^3$, einem Schmelzindex MFI bei 190 °C und 49 N von 0,4 bis 1,0 g/10 min und einem Schmelzindexverhältnis MFR als Quotient des MFI bei einer Belastung von 212 N und des MFI bei einer Belastung von 49 N von 10 bis 30,

    B) 5 bis 45 Masseprozent eines Ethylenpolymerisates hoher Dichte
    mit einer Dichte bei 23 °C von 0,940 bis 0,960 g/cm$^3$, einer Viskositätszahl J von 500 bis 1000 ml/g und einer breiten, vorzugsweise bimodalen Molmassenverteilung mit einem Bimodalitätsparameter B von 1,02 bis 2,0 und einem Maximum der Verteilung bei Molmassen größer als 800 000,

    C) 2 bis 40 Masseprozent eines linearen Ethylenpolymerisates niedriger Dichte mit einer Dichte bei 23 °C von 0,910 bis 0,930 g/cm$^3$ und einem Schmelzindex MFI bei 190 °C und 21,2 N von 0,5 bis 10 g/10 min sowie

    D) 0 bis 5 Masseprozent üblicher Kunststoffadditive einschließlich Stabilisatoren und Farbstoffe.

2. Polyethylen-Formmasse auf der Grundlage hochmolekularer Ethylenpolymerisate hoher Dichte nach Anspruch 1, hergestellt durch Mischen der genannten Ausgangskomponenten und anschließendes Granulieren der Mischung.

3. Polyethylen-Formmasse nach Anspruch 1, enthaltend 55 bis 75 Masseprozent der Komponente A, 15 bis 25 Masseprozent der Komponente B, 4 bis 20 Masseprozent der Komponente C sowie 0,2.bis 1,0 Masseprozent der Komponente D.

**Claims**

1. Polyethylene moulding compound based on high-molecular high-density ethylene polymers containing

A) 40 to 90 per cent by weight of a high-density ethylene polymer with a density at 23 °C of 0.940 to 0.955 g/cm$^3$, a melt flow index MFI at 190 °C and 49 N of 0.4 to 1.0 g/10 min and a melt flow index ratio MFR of 10 to 30 being the quotient of the MFI at a load of 212 N and the MFI at a load of 49 N,

B) 5 to 45 per cent by weight of a high-density ethylene polymer with a density at 23 °C of 0.940 to 0.960 g/cm$^3$, a viscosity number J of 500 to 1,000 ml/g and a wide, preferably bimodal molecular weight distribution with a bimodality parameter B of 1.02 to 2.0 and a distribution maximum with molecular weights above 800,000,

C) 2 to 40 per cent by weight of a linear low-density ethylene polymer with a density at 23 °C of 0.910 to 0.930 g/cm$^3$ and a melt flow index MFI at 190 °C and 21.2 N of 0.5 to 10 g/10 min as well as

D) 0 to 5 per cent by weight of the usual additives to plastics inclusive of stabilisers and pigments.

2. Polyethylene moulding compound based on high-molecular high-density ethylene polymers in accordance with claim 1, produced by mixing the aforesaid starting components and subsequent pelletising of the mixture.

3. Polyethylene moulding compound in accordance with claim 1 containing 55 to 75 per cent by weight of component A, 15 to 25 per cent by weight of the component B, 4 to 20 per cent by weight of the component C and 0.2 to 1.0 per cent by weight of component D.

**Revendications**

1. Matières à mouler au polyéthylène à la base de polymérisats d'éthylène haute densité de poids moléculaire élevé, contenant

A) un pourcentage en poids de 40 à 90 d'un polymérisat d'éthylène de haute densité avec une densité à 23 °C de 0,940 à 0,955 g/cm$^3$, un indice de fusion MFI par 190 °C et 49 N de 0,4 à 1,0 g/10 mn et un rapport d'indice de fusion MFR de 10 à 30 comme quotient de MFI sous une charge de 212 N et de MFI sous une charge de 49 N,

B) un pourcentage en poids de 5 à 45 d'un polymérisat d'éthylène de haute densité
avec une densité à 23 °C de 0,940 à 0,960 g/cm$^3$,
un indice de viscosité J de 500 à 1000 ml/g et une large répartition des poids moléculaires, bimodale de préférence avec un paramètre de bimodalité B de 1,02 à 2,0 et un maximum de la répartition par des poids moléculaires supérieurs à 800 000,

C) un pourcentage en poids de 2 à 40 d'un polymérisat d'éthylène linéaire de basse densité avec une densité à 23 °C de 0,910 à 0,930 g/cm$^3$ et un indice de fusion MFI par 190 °C et 21,2 N de 0,5 jusqu'à 10 g/10 mn ainsi que

D) un pourcentage en poids de 0 à 5 d'adjuvants plastiques habituels, y compris stabilisateurs et colorants.

2. Matières à mouler au polyéthylène à la base de polymérisats d'éthylène haute densité selon la spécification 1, produites par le mélange des constituants de base cités et par la granulation du mélange s'en suivant.

3. Matières à mouler au polyéthylène selon la spécification 1, contenant un pourcentage en poids de 55 à 75 du constituant A, de 15 à 25 en poids du constituant B, de 4 à 20 en poids du constituant C et de 0,2 à 1,0 en poids du constituant D.